# EUROPÄISCHE PATENTANMELDUNG

(11) **EP 1 712 268 A1**
(43) Veröffentlichungstag der Anmeldung: **18.10.2006**
(21) Anmeldenummer: 06004430.2
(22) Anmeldetag: 04.03.2006
(51) Int. Cl.: B01D 53/04

(54) **Filterelement und Filteranordnung**

(30) Priorität: 12.04.2005 DE 102005016677
(71) Anmelder: Carl Freudenberg KG, 69469 Weinheim (DE)
(72) Erfinder: Bräunling, Volker, 64646 Heppenheim (DE); Bader, Robert, 69115 Heidelberg (DE); Schmitt, Daniel, 69488 Birkenau (DE)

(57) **Zusammenfassung**

Ein Filterelement, umfassend einen Filterkörper mit einer Anströmseite und einer Abströmseite, wobei der Filterkörper schichtweise aufgebaut ist, wobei zumindest eine Schicht körnige Adsorbentien und zumindest eine weitere Schicht Aktivkohlefasern umfasst, ist im Hinblick auf die Aufgabe, ein Filtersystem zu schaffen, welches eine optimale Ausnutzung der Beladungskapazität des verwendeten Filterelements gewährleistet, dadurch gekennzeichnet, dass eine erste Schicht, welche Aktivkohlefasern umfasst, der Anströmseite zugeordnet ist und sich an diese Schicht abströmseitig eine zweite anschließt, welche körnige Adsorbentien umfasst. Eine Filteranordnung umfasst das Filterelement.

## Beschreibung

### Technisches Gebiet

Die Erfindung betrifft ein Filterelement, umfassend einen Filterkörper mit einer Anströmseite und einer Abströmseite, wobei der Filterkörper schichtweise aufgebaut ist, wobei zumindest eine Schicht körnige Adsorbentien und zumindest eine weitere Schicht Aktivkohlefasern umfasst. Die Erfindung betrifft des Weiteren eine Filteranordnung.

### Stand der Technik

Derartige Filterelemente, welche körnige Adsorbentien und Flächengebilde aus Aktivkohlefasern kombinieren, sind bereits bekannt. Die körnigen Adsorbentien werden dabei in Anströmrichtung vor dem Flächengebilde aus Aktivkohlefasern angeordnet. Die Anordnung der körnigen Adsorbentien vor der Aktivkohlefaserschicht soll eine besonders günstige Aufnahme von in der Luft enthaltenen Schadstoffen bewirken. Die in der Luft enthaltenen Schadstoffe - die Adsorptive - werden teilweise durch die körnigen Adsorbentien adsorbiert und treten teilweise durch die Schicht an körnigen Adsorbentien hindurch. Dabei ist nachteilig, dass die körnigen Adsorbentien ihre maximale Beladung an Adsorbat häufig noch nicht erreicht hat und dennoch ein Großteil der Schadstoffe an diesen vorbei strömt. Der durch die körnigen Adsorbentien hindurch getretene Teil der Adsorptive wird sodann in einer Aktivkohlefaserschicht adsorbiert.

Insbesondere ergibt sich das Problem, dass Adsorptive, welche von den körnigen Adsorbentien kapazitiv hätten aufgenommen werden können, auch durch die Aktivkohlefaserschicht unzureichend gefiltert hindurch treten. Auf Grund dieses Verhaltens der gattungsbildenden Filterelemente kann nicht sicher gestellt werden, dass ein Raum, welcher vor mit Schadstoff belasteter Luft geschützt werden soll, möglichst wenig kontaminiert wird.

Insoweit weisen die aus dem Stand der Technik bekannten Filterelemente im Hinblick auf ihren Wirkungsgrad und effektive Ausnutzung ihres Beladungsvermögens erhebliche Nachteile auf.

### Darstellung der Erfindung

Der Erfindung liegt daher die Aufgabe zu Grunde, ein Filtersystem zu schaffen, welches eine optimale Ausnutzung der Beladungskapazität des verwendeten Filterelements gewährleistet. Die vorliegende Erfindung löst die zuvor genannte Aufgabe durch die Merkmale des Patentanspruchs 1. Danach ist das Filterelement der eingangs genannten Art dadurch gekennzeichnet, dass eine erste Schicht, welche Aktivkohlefasern umfasst, der Anströmseite zugeordnet ist und sich an diese Schicht abströmseitig eine zweite anschließt, welche körnige Adsorbentien umfasst.

Erfindungsgemäß ist zunächst erkannt worden, dass die gattungsbildenden Filterelemente erhebliche Nachteile aufweisen. In einem zweiten Schritt ist sodann erkannt worden, dass Aktivkohlefasern sich auf Grund ihrer Dimensionen durch hohe Adsorptionsgeschwindigkeiten auszeichnen. In einem dritten Schritt ist sodann erkannt worden, dass die erfindungsgemäße Anordnung der Schichten überraschender Weise bewirkt, dass eine hohe Adsorptionskapazität erzielt werden kann. Des Weiteren ist erkannt worden, dass die erfindungsgemäße Anordnung bewirkt, dass ein geringerer Anteil an mit Schadstoff beladener Luft die erste Schicht ungefiltert durchbricht.

Schließlich ist erkannt worden, dass die erfindungsgemäße Anordnung eine höhere Adsorptionsgeschwindigkeit der Gesamtanordnung bewirkt. Insoweit ist durch die erfindungsgemäße Anordnung ein kombinatorischer Effekt realisiert, welcher sich in der Steigerung der Adsorptionskapazität sowie der Adsorptionsgeschwindigkeit unter optimaler Ausnutzung der Beladungskapazität des Filterelements ausdrückt. Folglich ist die eingangs genannte Aufgabe gelöst.

Die körnigen Adsorbentien könnten Aktivkohle umfassen. Aktivkohle zeichnet sich durch ein besonders gutes Aufnahmevermögen für nahezu alle relevanten Adsorptive aus.

Ganz in Abhängigkeit von den chemischen oder physikalischen Eigenschaften des Adsorptivs könnten auch Zeolithe, Cyclodextrine, Silikate, lonentauscher oder Alumosilikate als körnige Adsorbentien verwendet werden. Dabei ist denkbar, diese Stoffe in Mischung oder in reiner Form zu verwenden.

An die zweite Schicht könnte sich eine dritte Schicht anschließen, welche Aktivkohlefasern umfasst. Diese konkrete Ausgestaltung erlaubt einen "sandwichartigen" Aufbau des Filterkörpers. Dies stellt sicher, dass mit Schadstoff beladene Luft, welche die körnige Aktivkohle ungefiltert passiert, einer erneuten und effektiven Filterung durch Aktivkohlefasern unterzogen wird. Die Dicke der Schichten könnte in Abhängigkeit von der Schadstoffbeladung gewählt werden. Denkbar ist auch, dass die Dicke der einzelnen Schichten in Abhängigkeit vom Typ des Adsorptivs gewählt wird. Beispielsweise ist denkbar, dass ein erstes Adsorptiv bevorzugt in der ersten Schicht, ein zweites Adsorptiv bevorzugt in der zweiten und ein drittes Adsorptiv bevorzugt in der dritten Schicht adsorbiert wird. Insoweit erlaubt der schichtweise Aufbau des Filterkörpers eine selektive Anpassung an unterschiedliche Adsorptive.

Zumindest eine Schicht, welche Aktivkohlefasern umfasst, könnte als Vliesstoff ausgebildet sein. Die Verwendung eines Vliesstoffs ist vorteilhaft, da er in seiner Struktur stabil ist und folglich eine problemlose Herstellung und Handhabung des Filterkörpers ermöglicht.

Die Schichten, welche Aktivkohlefasern umfassen, könnten neben den Aktivkohlefasern weitere Fasern oder Partikel enthalten. Diese Ausgestaltung erlaubt eine Einstellung der mechanischen Stabilität, Porosität und Elastizität der Aktivkohlefaserschicht. Des Weiteren ist es bei bestimmten Mengen an Aktivkohlefasern möglich, eine homogene Gleichverteilung der Fasern im Vliesstoff sicherzustellen. Dabei ist denkbar, dass ein Vliesstoff verwendet wird, in dem 30 bis 70% Aktivkohlefasern eingearbeitet sind. Die zu den Aktivkohlefasern hinzugegebenen Fasern könnten aus Polyamiden, Polyolefinen, Polyestern oder anderen thermoplastischen Materialien gebildet sein. Die Wahl dieser Materialien erlaubt eine problemlose thermische Verbindung der Fasern untereinander. Als Bindefasern könnten auch Bikomponentenfasern, insbesondere Kern-Mantel-Fasern, verwendet werden. Hierbei ist von Vorteil, dass der Mantel und der Kern aus Materialien mit unterschiedlichen Schmelzpunkten und damit unterschiedlicher Stabilität gefertigt sein können. Hierdurch ist eine problemlose thermische Verbindung bei hoher Stabilität realisierbar. Denkbar ist auch, in die Aktivkohlefaserschicht Aktivkohlepartikel oder Partikel anderer Adsorbentien einzustreuen, um das Adsorptionsverhalten selektiv zu modifizieren.

Die Schichten, welche körnige Adsorbentien umfassen, könnten weitere Fasern oder Partikel enthalten. Denkbar ist hierbei, dass eine Schicht zu 90% aus körnigen Adsorbentien und zu 10% aus Fasern oder anderen Partikeln besteht. Ganz in Abhängigkeit von den mechanischen Anforderungen, die an den Filterkörper gestellt werden, kann die Beladung mit körnigen Adsorbentien auch geringer ausgewählt werden.

Die Aktivkohlefasern könnten einen Durchmesser von höchstens 20 µm aufweisen. Die Auswahl des Durchmessers aus diesem Bereich hat sich als besonders vorteilhaft im Hinblick auf die Adsorptionsgeschwindigkeit und Adsorptionskapazität herausgestellt.

Als körnige Adsorbentien verwendete Aktivkohlepartikel könnten eine Größe aufweisen, die im Bereich 0,25 mm und 0,85 mm liegt. Dieser Bereich hat sich als guter Kompromiss zwischen Adsorptionsgeschwindigkeit, Adsorptionskapazität und Druckverlust erwiesen. Der angegebene Bereich entspricht der Einheit 20 X 60 mesh (Mesh size nach ASTM Designation D 2862-97). Die körnigen Aktivkohlepartikel könnten auch im Bereich 10 mesh bis 150 mesh liegen, um ein zufriedenstellendes Adsorptionsverhalten zu realisieren. Je geringer die Größe der Aktivkohlepartikel gewählt wird, desto größer ist die Adsorptionsgeschwindigkeit. Experimentell konnte ein Optimum zwischen hoher Adsorptionsgeschwindigkeit und hoher Adsorptionskapazität sowie niedrigem Druckverlust ermittelt werden, wenn die Größe der Partikel aus dem angegebenen Bereich gewählt wird.

Eine mit körnigen Adsorbentien beladene Schicht könnte ein Flächengewicht von 100 bis 500 g/m² aufweisen. Die Auswahl des Flächengewichts aus diesem Bereich stellt sicher, dass der Filterkörper ein zufrieden stellendes Adsorptionsverhalten aufweist. Des Weiteren ist durch dieses Flächengewicht realisiert, dass die Schicht noch ausreichende mechanische Eigenschaften aufweist, die deren Gebrauchstauglichkeit gewährleisen.

Eine mit Aktivkohlefasern beladene Schicht könnte ein Flächengewicht von 10 bis 200 g/m² aufweisen. Die Wahl des Flächengewichts aus diesem Bereich hat sich als besonders geeignet erwiesen, um ein gutes Adsorptionsverhalten des Filterkörpers bei geringem Druckverlust sicher zu stellen. Insbesondere konnte experimentell ermittelt werden, dass das angegebene Flächengewicht an Aktivkohlefasern in Kombination mit dem oben angegebenen Flächengewicht in Bezug auf körnige Aktivkohle besonders gute Ergebnisse im Hinblick auf die Adsorptionskapazität und Adsorptionsgeschwindigkeit sicher stellt.

Das Filterelement könnte einen progressiven Aufbau aufweisen. Ein solcher Aufbau zeigt keine Schichten mit scharfer Abtrennung zu benachbarten Schichten. Vielmehr sind die Schichten als Bereiche ausgebildet, die in Bereiche anderer Materialkonsistenz fließend übergehen. Dieser Aufbau ermöglicht eine besonders feste materialschlüssige Verbindung der einzelnen Schichten untereinander und einen einheitlichen Fertigungsprozess.

Das Filterelement könnte Schichten aufweisen, welche Bereiche unterschiedlicher Materialkonzentration umfassen. Insbesondere ist hierbei denkbar, dass innerhalb einer Schicht Gradienten in Bezug auf bestimmte Materialkonzentrationen ausgebildet sind. Dieser Aufbau ermöglicht die Steigerung der Aufnahmekapazität beispielsweise in Abströmrichtung, wenn nämlich die Adsorbentienkonzentration in Abströmrichtung zunimmt.

Die eingangs genannte Aufgabe wird des Weiteren mit den Merkmalen des Patentanspruchs 14 gelöst. Danach umfasst eine Filteranordnung ein Filterelement, wobei eine Aktivkohlefaserschicht von mit Adsorptiv beladener, ungefilterter Luft anströmbar ist.

Um Wiederholungen zu vermeiden, sei auf die Ausführungen zur erfinderischen Tätigkeit verwiesen.

Das Filterelement in allen zuvor beschriebenen möglichen Ausgestaltungen könnte in Kraftfahrzeugen aber auch in der Gebäudetechnik Verwendung finden. Bei der Verwendung im Kraftfahrzeugbereich kann das Filterelement in einer Filteranordnung vorgesehen sein, die den Innenraum des Kraftfahrzeugs vor mit Schadstoff beladener Luft schützen soll. Diese Anwendung und Wirkung ist auch in der Gebäudetechnik, beispielsweise in Verbindung mit Klimaanlagen denkbar. Denkbar ist vor diesem Hintergrund auch, das Filterelement in Atemschutzmasken zu verwenden.

Das hier beschriebene Filterelement könnte auch in Raumluftreinigern, sogenannten "Air Purifiern" Verwendung finden. Raumluftreiniger sind üblicherweise nicht fest installiert, sondern stellen mobile Einrichtungen dar, die beispielsweise in Gebäuden aber auch in Kraftfahrzeugen Anwendung finden.

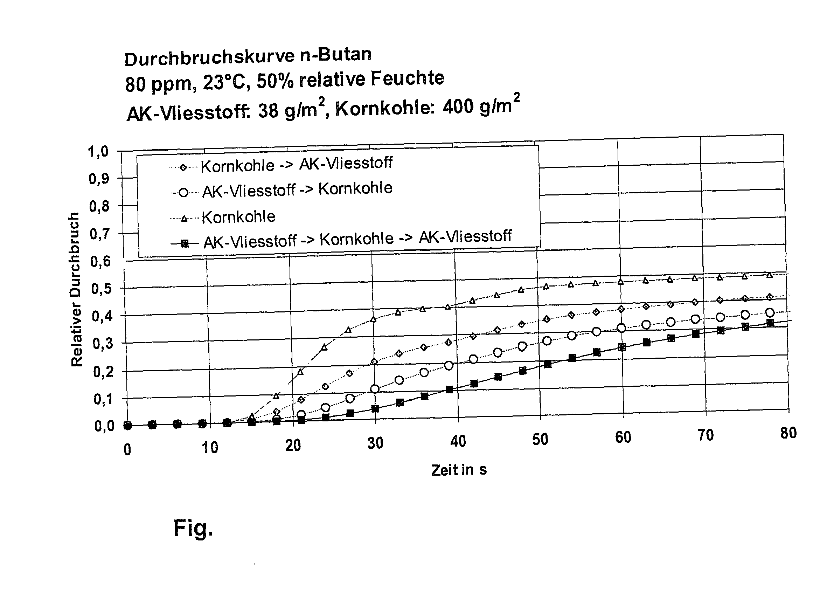

Es gibt nun verschiedene Möglichkeiten, die Lehre der vorliegenden Erfindung auf vorteilhafte Weise auszugestalten und weiter zu bilden. Dazu ist einerseits auf die dem Patentanspruch 1 nachgeordneten Ansprüche, andererseits auf die nachfolgende Erläuterung bevorzugter Ausführungsbeispiele der Erfindung an Hand der Zeichnung zu verweisen. In Verbindung mit der Erläuterung der bevorzugten Ausführungsbeispiele der Erfindung an Hand der Zeichnung werden auch im Allgemeinen bevorzugte Ausgestaltungen und Weiterbildungen der Lehre erläutert.

### Kurzbeschreibung der Zeichnung

In der Zeichnung zeigt die einzige
- Fig.: ein Diagramm, welches die zeitliche Durchbruchscharakteristik von mit Schadstoff beladener Luft an vier Filterelementen darstellt.

### Ausführung der Erfindung

Die einzige Fig. zeigt ein Diagramm, in dem das Durchbruchsverhalten von vier Filterelementen gezeigt ist.

Dabei zeigt die mit Quadraten gekennzeichnete Kurve das Verhalten eines sandwichartig aufgebauten Filterelements. Dieses umfasst eine erste Schicht aus Aktivkohlefaservliesstoff mit 38 g /m² Flächengewicht, eine zweite Schicht körniger Aktivkohle mit 400 g /m² Flächengewicht und eine dritte Schicht, die mit der ersten identisch ist.

Des Weiteren zeigt die mit Kreisen gekennzeichnete Kurve ein Filterelement, bei welchem anströmseitig eine Aktivkohlefaserschicht mit einem Flächengewicht von 38 g / m² angeordnet ist. Dieser folgt eine Schicht mit körniger Aktivkohle, welche ein Flächengewicht von 400 g / m² aufweist.

Die mit Rhomben gekennzeichnete Kurve repräsentiert ein Filterelement, bei dem anströmseitig die Schicht mit körniger Aktivkohle angeordnet ist.

Schließlich zeigt die mit Dreiecken gekennzeichnete Kurve ein Filterelement, das lediglich aus einer Schicht körniger Aktivkohle mit einer Flächenbeladung von 400 g / m² besteht.

Die Vergleichsmessungen wurden bei 23°C und einer relativen Luftfeuchtigkeit von 50% durchgeführt. Als Testgas wurde n-Butan mit einer Konzentration von 80 ppm eingesetzt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Filterelement, umfassend einen Filterkörper mit einer Anströmseite und einer Abströmseite, wobei der Filterkörper schichtweise aufgebaut ist, wobei zumindest eine Schicht körnige Adsorbentien und zumindest eine weitere Schicht Aktivkohlefasern umfasst, **dadurch gekennzeichnet, dass** eine erste Schicht, welche Aktivkohlefasern umfasst, der Anströmseite zugeordnet ist und sich an diese Schicht abströmseitig eine zweite anschließt, welche körnige Adsorbentien umfasst.

2. Filterelement nach Anspruch 1, **dadurch gekennzeichnet, dass** die körnigen Adsorbentien Aktivkohle umfassen.

3. Filterelement nach Anspruch 1 oder 2, **dadurch gekennzeichnet, dass** die körnigen Adsorbentien Zeolithe, Cyclodextrine, Silikate, lonentauscher oder Alumosilikate umfassen.

4. Filterelement nach einem der Ansprüche 1 bis 3, **dadurch gekennzeichnet, dass** sich an die zweite Schicht eine dritte Schicht anschließt, welche Aktivkohlefasern umfasst.

5. Filterelement nach einem der Ansprüche 1 bis 4, **dadurch gekennzeichnet, dass** zumindest eine Schicht, welche Aktivkohlefasern umfasst, als Vliesstoff ausgebildet ist.

6. Filterelement nach einem der Ansprüche 1 bis 5, **dadurch gekennzeichnet, dass** die Schichten, welche Aktivkohlefasern umfassen, neben den Aktivkohlefasern weitere Fasern oder Partikel enthalten.

7. Filterelement nach einem der Ansprüche 1 bis 6, **dadurch gekennzeichnet, dass** die Schichten, welche körnige Adsorbentien umfassen, neben den körnigen Adsorbentien weitere Fasern oder Partikel enthalten.

8. Filterelement nach einem der Ansprüche 1 bis 7, **dadurch gekennzeichnet, dass** die Aktivkohlefasern einen Durchmesser von höchstens 20 µm aufweisen.

9. Filterelement nach einem der Ansprüche 2 bis 8, **dadurch gekennzeichnet, dass** die körnigen Aktivkohlepartikel eine Größe aufweisen, die im Bereich zwischen 0,1 mm und 2 mm liegt.

10. Filterelement nach einem der Ansprüche 1 bis 9, **dadurch gekennzeichnet, dass** eine mit körnigen Adsorbentien beladene Schicht eine Flächenbeladung von 100 bis 500 g / m² aufweist.

11. Filterelement nach einem der Ansprüche 1 bis 10, **dadurch gekennzeichnet, dass** eine aus Aktivkohlefasern bestehende Schicht ein Flächengewicht von 10 bis 200 g / m² aufweist.

12. Filterelement nach einem der Ansprüche 1 bis 11, **gekennzeichnet durch** einen progressiven Aufbau.

13. Filterelement nach Anspruch 12, **dadurch gekennzeichnet, dass** die Schichten Bereiche unterschiedlicher Materialkonzentration aufweisen.

14. Filteranordnung, umfassend ein Filterelement nach einem der voranstehenden Ansprüche, wobei eine Aktivkohlefaserschicht von mit Adsorptiven beladener, ungefilterter Luft anströmbar ist.
